# EUROPEAN PATENT SPECIFICATION

(11) **EP 0 569 953 B1**
(45) Date of publication and mention of the grant of the patent: **31.01.1996**
(21) Application number: 93107684.8
(22) Date of filing: 11.05.1993
(51) Int. Cl.: B60K 35/00, G01D 11/24, F16B 21/02

(54) **On-board vehicle instrument comprising a dial and an operating mechanism**
Fahrzeug-Anzeigegerät, bestehend aus einem Ziffernblatt und einem Betätigungsmechanismus
Intrument embarqué dans un véhicule comprenant un cadran et un mécanisme de commande

(30) Priority: 12.05.1992 IT TO920129 U
(43) Date of publication of application: 18.11.1993
(73) Proprietor: MAGNETI MARELLI S.p.A., I-20145 Milano (IT)
(72) Inventor: Paganini, Riccardo, 20020 Busto Garolfo (IT)
(74) Representative: Boggio, Luigi

(56) References cited:
- DE-C- 344 001
- US-A- 4 753 112

## Description

The present invention relates to an on-board vehicle instrument comprising a dial and an operating mechanism.

Vehicle cabs and particularly the dashpanels of automobiles are fitted with various on-board instruments, such as speedometers, odometers, clocks, temperature gauges, etc., the operating mechanism of which normally presents a substantially cylindrical body terminating at one end with a shaft fitted through the dial and connected to the pointer. The body presents at least two assembly appendices projecting laterally in relation to the end fitted with the through shaft.

The automobile industry demands increasing output of increasingly low-cost instruments, which therefore means maximizing automation in terms of both component manufacture and assembly.

As yet, the dial and operating mechanism of known on-board instruments are normally assembled using screws, which do not permit fully automated assembly by handing devices or robots. Consequently, assembly is relatively time-consuming, and the finished instruments invariably expensive.

It is known from the document US-A-4 753 112 a gauge, such as a pressure gauge, having a visible indicator for rotation about a central axis, and an internal gauge mechanism housed in a substantially cylindrical case. The indicator is protected by a glass assembled on the case by means of a bayonet ring. This latter comprises embossments defining cam surfaces, which can be engaged by corresponding cam followers secured to the exterior surface of the case.

It is an object of the present invention to provide a straightforward, low-cost on-board instrument of the aforementioned type.

According to the present invention, there is provided an on-board vehicle instrument comprising a dial and an operating mechanism, wherein said mechanism comprises a substantially cylindrical body terminating at one end with a shaft fitted through said dial and connected to a pointer of the instrument; said body comprising at least two assembly appendices projecting radially from said end; and said dial comprising an opening for said shaft; characterized in that said dial comprises at least two L-shaped elements projecting axially from said dial, and that said appendices and said two L-shaped elements form part of a bayonet connector for connecting said dial to said body.

A preferred, non limiting embodiment of the present invention will be described by way of example with reference to the accompanying drawings, in which:
Fig. 1 shows a partially sectioned side view of an on-board vehicle instrument according to the present invention;
Fig. 2 shows a view of the instrument along line II-II in Fig. 1;
Fig. 3 shows a view of the instrument operating mechanism along line III-III in Fig. 1;

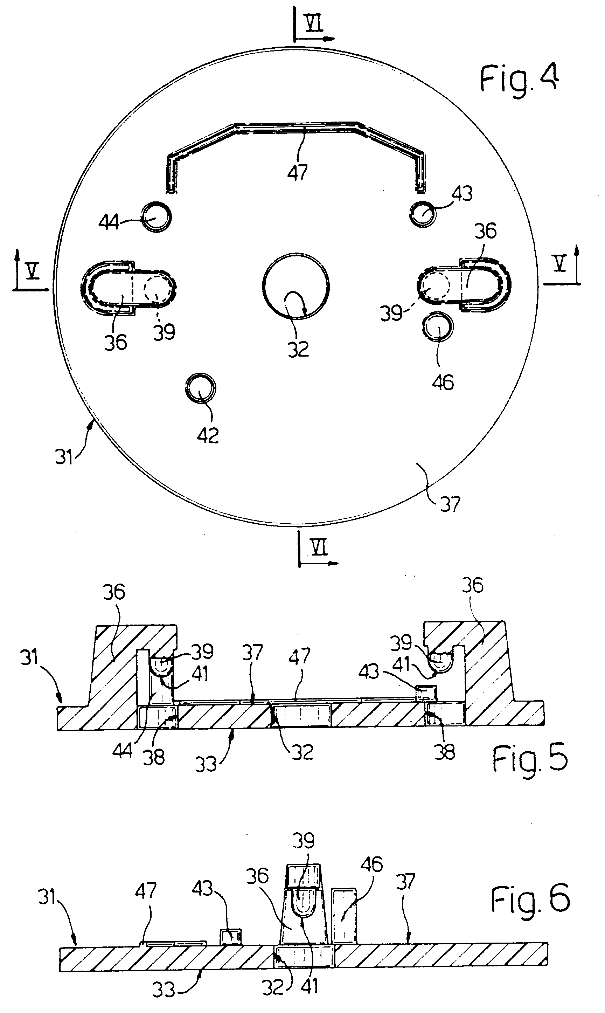

Fig. 4 shows a view of the instrument dial along line IV-IV in Fig.1;
Fig. 5 shows a section along line V-V in Fig. 4;
Fig. 6 shows a section along line VI-VI in Fig. 4;
Fig. 7 shows the Fig. 2 view in the preassembly position.

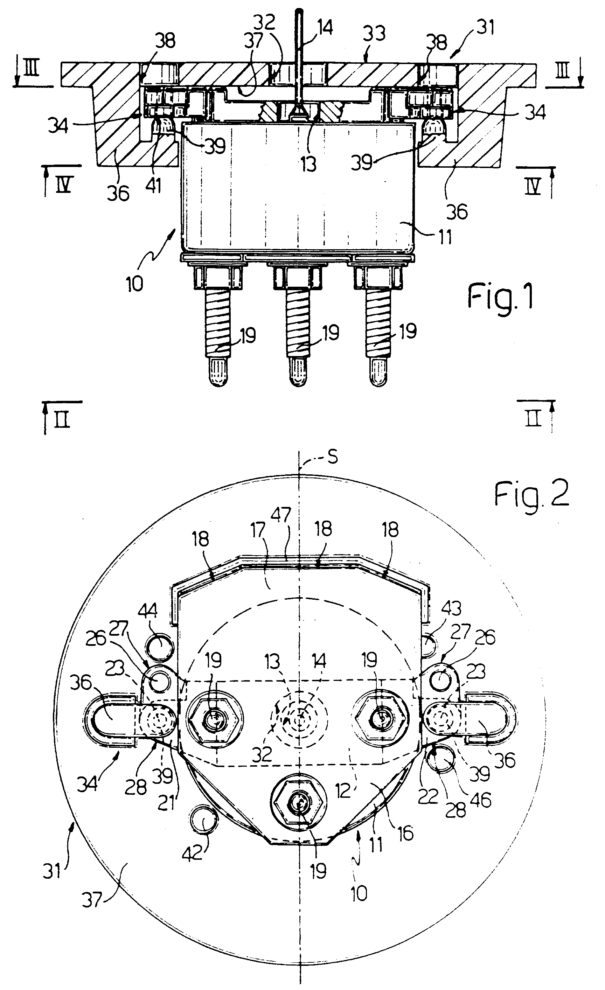

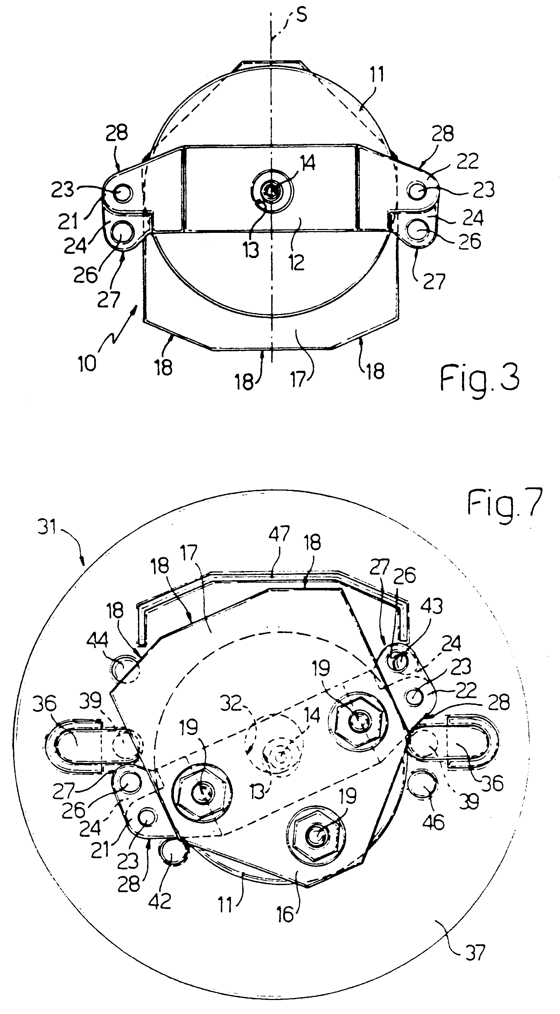

Number 10 in Fig.1 indicates the operating mechanism of an on-board vehicle instrument, such as a speedometer. Mechanism 10 may consist of an electric motor or electromagnet, and is housed inside a cylindrical body 11 terminating at one end with a crosspiece 12 (Fig.3) having a central hole 13 through which is fitted a shaft 14 rotated in known manner by mechanism 10.

Body 11 terminates at the other end with a plate 16 (Fig.2) in the form of an irregular polygon, and having a portion 17 with at least three sides 18 projecting in relation to cylindrical body 11. From plate 16 there extend three pins 19 (Fig.1) which are connected in known manner to an electrical receptacle on the dashpanel.

Crosspiece 12 (Fig.3) presents two substantially diametrically-opposed appendices 21 and 22 for fitting the instrument to the dashpanel and projecting radially from body 11. In particular, appendices 21 and 22 are symmetrical in relation to plane S and therefore of different shapes.

Appendices 21 and 22 present respective locating holes 23, and respective depressions 24 extending angularly from respective holes 23 in opposite directions, so that appendices 21 and 22 are symmetrical. Each depression 24 presents a further hole 26 for fitment to the dashpanel, and is defined by a lateral wall 27 concentric with hole 26. Finally, each appendix 21 and 22 presents a lateral wall 28 opposite depression 24.

The instrument also comprises a circular dial 31 (Fig.s 1 and 2) molded from thermoplastic material and having a central opening 32 (Fig.s 4-6) through which shaft 14 is fitted. The outer surface 33 of dial 31 presents the usual markings for the pointer, which is fitted to shaft 14.

According to the present invention, dial 31 is assembled to mechanism 10 by means of a bayonet connector indicated as a whole by 34. In particular, dial 31 comprises two flexible, L-shaped elements 36 projecting axially from inner surface 37 of dial 31, and located angularly so as to correspond with appendices 21 and 22 of crosspiece 12.

Elements 36 are formed in one piece with dial 31, and, at each element 36, dial 31 presents a recess 38 for achieving greater flexibility. The end of each element 36 presents a pin 39 parallel to the axis of dial 31 and having a curved or preferably semispherical end 41 designed to engage hole 23 in appendix 21, 22 of crosspiece 12.

Dial 31 also presents guide means for foolproof fitting of body 11 on to dial 31. Said guide means comprise a locating pin 42 designed to laterally engage wall 28 of appendix 21 of crosspiece 12, opposite to depression 24 (Fig.s 4-7); and a pin 43 shorter than pin 42, and the end of which frontally engages depression 24 of the other appendix 22 of crosspiece 12.

Pins 42 and 43 are so located that any attempt to fit or preassemble mechanism 10 to dial 31 in a position wherein they are mutually rotated 180° results in the longer pin 42 frontally engaging appendix 22 outside depression 24, which error is communicated to the operator or handling device.

Dial 31 also presents means for arresting rotation (clockwise in Fig, 7) of bayonet connector 34, which means comprise two pins 44 and 46 arranged in such a manner that pin 44 arrests wall 27 of appendix 21, adjacent to depression 24, while pin 46 arrests wall 28 of appendix 22, opposite to depression 24.

Finally, inner surface 37 of dial 31 presents a rib 47 of the same shape as at least the three sides 18 of projecting portion 17 of plate 16, which sides 18 are so arranged as to remain permanently within rib 47 when rotated from the Fig.7 to the Fig.2 position, and are only aligned with rib 47 upon completion of the assembly operation, of which rib 47 thus acts as an optical reference.

To assemble dial 31 and mechanism 10, mechanism 10 is first brought frontally up to surface 37 of dial 31, so that depression 24 of appendix 22 rests on the end of pin 43, and wall 28 of appendix 21 rests laterally on pin 42. Though mechanism 10 is thus slightly offset in relation to dial 31 (as shown in Fig.7), the diameter of opening 32 in dial 31 is such as to still enable insertion of shaft 14.

At this point, dial 31 and mechanism 10 are rotated in relation to each other, so that mechanism 10 turns clockwise in relation to dial 31, and so that appendices 21 and 22 engage the semispherical ends 41 of pins 39 by flexing the two L-shaped elements 36, and are eventually arrested against respective pins 44 and 46.

In this position, holes 23 of appendixes 21 and 22 at least partially engage ends 41 of pins 39, despite shaft 14 being offset in relation to opening 32. When mechanism 10 is then released, the elastic force exerted by elements 36 via semispherical ends 41 aligns holes 23 perfectly with pins 39 so as to form a certain amount of clearance between appendices 21 and 22 and pins 44 and 46, as shown in Fig.2.

The advantages, as compared with the known technique, of the assembly device according to the present invention will be clear from the foregoing description. In particular, it requires no screws or additional fastening elements; assembly may be effected easily by means of a handling device involving only a minimum number of movements and control members; and the dial may be mass produced easily on a high-output thermoplastic molding press.

To those skilled in the art it will be clear that changes may be made to the device as described and illustrated herein, for example, changes may be made to the number and design of appendices 21 and 22, elements 36, locators 42 and 43, and stops 44 and 46; and rib 47 may either be dispensed with or replaced by any other type of reference element.

## Claims

1. On board vehicle instrument comprising a dial and an operating mechanism, where in said mechanism (10) comprises a substantially cylindrical body (11) terminating at one end with a shaft (14) fitted through said dial (31) and connected to a pointer of the instrument; said body (11) comprising at least two assembly appendices (21, 22) projecting radially from said end; and said dial (31) comprising an opening (32) for said shaft (14); characterized in that said dial (31) comprises at least two L-shaped elements (36) projecting axially from said dial (31), and that said appendices (21, 22) and said two L-shaped elements (36) form part of a bayonet connector (34) for connecting said dial (31) to said body (11).

2. An instrument as claimed in Claim 1, characterized in that it presents guide means (42, 43) for foolproof fitting of said body (11) to said dial (31); and stop means (44, 46) for arresting the rotation of said body (11) relatively to said dial (31).

3. An instrument as claimed in Claim 2, wherein each of said appendices (21, 22) comprises a locating hole (23) and a depression (24), each depression (24) extending angularly from its associated hole (23) in opposite directions, so that said appendices (21, 22) are symmetrical to each other with respect to a plane (S) through the longitudinal axis of said cylindrical body (11); characterized in that said guide means (42, 43) comprise a first pin (42) so designed that upon insertion of said body (11) in said dial (31) it engages a wall (28) of a first of said appendices (21, 22) opposite to its depression (24); and a locating member (43) shorter than said first pin (42) and designed to frontally engage said depression (24) of the other of said appendices (21, 22).

4. An instrument as claimed in Claim 3, characterized in that the end of each said element (36) presents a second pin (39) parallel to said first pin (42) and terminating in a curved end (41); the curved ends (41) of each of said appendices (21, 22) being engaged by said locating holes (23) for correctly positioning said cylindrical body (11) upon rotation of said body (11) relative to said dial (31).

5. An instrument as claimed in Claim 3 or 4, characterized in that said opening (32) is large enough to enable said body (11) to be prepositioned noncoaxially in relation to said opening (32); said elements (36) being so arranged that said curved ends (41) at least partially engage said locating holes (23) following said rotation.

6. An instrument as claimed in Claim 5, characterized in that said elements (36) are formed in one piece with said dial (31), which presents a recess (38) associated with each element (36); said elements (36) and said recesses (38) being so sized as to render said elements (36) flexible enough to align said locating holds (23) with respective said curved ends (41).

7. An instrument as claimed in one of the foregoing Claims 2 to 6, characterized in that said stop means comprise first and second stop pins (44, 46) arranged in such a manner that one of said first or second stop pins (44, 46) arrests a wall (27) of said first appendix (21) adjacent to its depression (24), and the other of said first or second stop pins (44, 46) arrests a wall (28) of said second appendix (22) opposite to its depression (24).

8. An instrument as claimed in one of the foregoing Claims 2 to 7, wherein said body (11) presents a polygonal end plate (16); characterized in that said dial (31) presents a rib (47) of the same shape as at least three sides (18) of said polygon, and which serves to optically indicate correct assembly.

## Patentansprüche

1. Einbauinstrument für Fahrzeuge mit einer Skalenscheibe (31) und einem Betätigungsmechanismus (10), der ein im wesentlichen zylindrisches Gehäuse (11) aufweist, welches an einem Ende mit einer durch die Skalenscheibe (31) geführten und mit einem Zeiger des Instrumentes verbundenen Welle (14) abschließt, wobei das Gehäuse (11) wenigstens zwei Montageansätze (21, 22) aufweist, die radial von dem besagten Ende des Gehäuses vorspringen, und die Skalenscheibe (31) mit einer Öffnung (32) für die Weile (14) versehen ist,
**dadurch gekennzeichnet,**
daß die Skalenscheibe (31) wenigstens zwei L-förmige axial von der Skalenscheibe (31) vorspringende Elemente (36) aufweist und
daß die Ansätze (21, 22) und die beiden L-förmigen Elemente (36) einen Teil eines Bajonettverschlusses (34) zum Verbinden der Skalenscheibe (31) mit dem Gehäuse (11) bilden.

2. Einbauinstrument nach Anspruch 1, dadurch gekennzeichnet, daß Führungsmittel (42, 43) zum narrensicheren Befestigen des Gehäuses (11) an der Skalenscheibe (31) sowie Anschlagmittel (44, 46) zum Festlegen der Drehung des Gehäuses (11) relativ zur Skalenscheibe (31) vorgesehen sind.

3. Einbauinstrument nach Anspruch 2, wobei jeder der Ansätze (21, 22) eine Halteöffnung (23) und eine sich winklig von der jeweils zugeordneten Öffnung (23) in entgegengesetzte Richtungen erstreckende Vertiefung (24) aufweist, so daß die Ansätze (21, 22) bezüglich einer durch die Längsachse des zylindrischen Gehäuses verlaufenden Ebene (S) symmetrisch zueinander sind , dadurch gekennzeichnet, daß die Führungsmittel (42, 43) einen ersten Stift (42) und ein Festlegeelement (43) aufweisen, wobei der erste Stift (42) derart ausgebildet ist, daß er beim Einsetzen des Gehäuses (11) in die Skalenscheibe (31) eine Wand (28) eines ersten der Ansätze (21, 22) gegenüber der Vertiefung (24) festlegt, und wobei das Festlegeelement (43) kürzer als der erste Stift (42) und so ausgebildet ist, daß er frontal in die Vertiefung (24) des zweiten der Ansätze (21, 22) einzugreifen vermag.

4. Einbauinstrument nach Anspruch 3, dadurch gekennzeichnet, daß an dem Ende eines jeden Elementes (36) parallel zu dem ersten Stift (42) ein zweiter Stift (39) angeordnet ist, der mit einem gekrümmten Ende (41) abschließt, und daß die gekrümmten Enden (41) eines jeden der Ansätze (21, 22) zum korrekten Positionieren des Gehäuses (11) bei der Drehung des Gehäuses (11) relativ zu der Skalenscheibe (31) in die Haltelöcher (23) eingreifen.

5. Einbauinstrument nach Anspruch 3 oder 4, dadurch gekennzeichnet, daß die Öffnung (32) groß genug bemessen ist, um eine bezüglich der Öffnung (32) nicht-koaxiale Vorpositionierung des Gehäuses (11) zu ermöglichen, und daß die Elemente (36) so angeordnet sind, daß die gekrümmten Enden (41) nach Abschluß der Drehbewegung wenigstens teilweise in die Haltelöcher (23) eingreifen.

6. Einbauinstrument nach Anspruch 5, dadurch gekennzeichnet, daß die Elemente (36) einstückig mit der Skalenscheibe (31) ausgebildet sind, welche jeweils eine einem jeden Element (36) zugeordnete Aussparung (38) aufweist, und daß die Elemente (36) und die Aussparungen (38) so bemessen sind, daß die Elemente (36) eine zur Ausrichtung der Halteöffnungen (23) mit den jeweiligen gekrümmten Enden (41) hinreichende Flexibilität erhalten.

7. Einbauinstrument nach einem der Ansprüche 2 bis 6, dadurch gekennzeichnet, daß Anschlagmittel erste und zweite Haltestifte (44, 46) aufweisen, die derart angeordnet sind, daß einer der ersten oder zweiten Haltestifte (44, 46) eine Wand (27) des ersten Ansatzes (21) neben der zugeordneten Vertiefung (24) und der andere der ersten oder zweiten Haltestifte (44, 46) eine Wand (28) des zweiten Ansatzes (22) gegenüber der zugeordneten Vertiefung (24) festlegt.

8. Einbauinstrument nach einem der Ansprüche 2 bis 7, dessen Gehäuse (11) eine polygonale Abschlußplatte (16) aufweist, dadurch gekennzeichnet, daß die Skalenscheibe (31) mit einer Rippe (47) versehen ist, welche dieselbe Form hat wie wenigstens drei Seiten (18) der polygonalen Abschlußplatte (16) und die optisch die korrekte Montage anzeigt.

## Revendications

1. Instrument de bord pour véhicule comprenant un cadran et un mécanisme de commande, dans lequel ledit mécanisme (10) comprend (11) un corps sensiblement cylindrique qui se termine à une extrémité par un arbre (14) enfilé à travers ledit cadran (31) et relié à une aiguille de l'instrument ; ledit corps (11) comprenant au moins deux appendices d'assemblage (21, 22) qui font saillie radialement sur ladite extrémité ; et ledit cadran (31) présentant une ouverture (32) pour le passage dudit arbre (14) ; caractérisé en ce que ledit cadran (31) comprend au moins deux éléments (36) en forme de L qui font saillie axialement sur ledit cadran (31), et en ce que lesdits appendices (21, 22) et les deux éléments (36) en forme de L font partie d'un connecteur à baïonnette (34) servant à assembler ledit cadran (31) audit corps (11).

2. Instrument selon la revendication 1, caractérisé en ce qu'il présente des moyens de guidage (42, 43) pour le montage sans fausse manoeuvre dudit corps (11) sur ledit cadran (31), et des moyens d'arrêt (44, 46) servant à arrêter la rotation dudit corps (11) par rapport audit cadran (31).

3. Instrument selon la revendication 2, dans lequel chacun des appendices (21, 22) présente un trou de positionnement (23) et un évidement (24), chaque évidement (24) partant du trou (23) correspondant en formant un angle, dans des directions opposées, de sorte que lesdits appendices (21, 22) sont symétriques l'un de l'autre par rapport à un plan (9) qui passe par l'axe longitudinal dudit corps cylindrique (11), caractérisé en ce que lesdits moyens de guidage (42, 43) comprennent un premier doigt (42) construit de manière qu'en réponse à l'insertion dudit corps (11) dans ledit cadran (31), il attaque une paroi (28) d'un premier desdits appendices (21, 22) à l'opposé de son évidement (24) ; et un élément de positionnement (43) plus court que ledit doigt (42) et construit de manière à attaquer frontalement ledit évidement (24) de l'autre desdits appendices (21, 22).

4. Instrument selon la revendication 3, caractérisé en ce que l'extrémité de chaque élément (36) présente un deuxième doigt (39) parallèle audit premier doigt (42) et se terminant par une extrémité arrondie (41) ; les extrémités arrondies (41) de chacun des appendices (21, 22) étant attaquées par lesdits trous de positionnement (23) servant à positionner correctement ledit corps cylindrique (11) à la suite de la rotation dudit corps (11) par rapport audit cadran (31).

5. Instrument selon la revendication 3 ou 4, caractérisé en ce que ladite ouverture (32) est suffisamment grande pour permettre de positionner préalablement ledit corps (11) dans une position non coaxiale par rapport à ladite ouverture (32) ; lesdits éléments (36) étant agencés de manière que lesdites extrémités arrondies (41) entrent au moins partiellement en prise avec lesdits trous de positionnement (23) à la suite de ladite rotation.

6. Instrument selon la revendication 5, caractérisé en ce que lesdits éléments (36) sont formés en une seule pièce avec ledit cadran (31), lequel présente un évidement (38) associé à chaque élément (36), lesdits éléments (36) et lesdits évidements (38) étant dimensionnés de manière à rendre lesdits éléments (36) suffisamment flexibles pour aligner lesdits trous de positionnement (23) sur lesdites extrémités arrondies (41) respectives.

7. Instrument selon une quelconque des revendications précédentes 2 à 6, caractérisé en ce que lesdits moyens d'arrêt comprennent des premier et deuxième doigts de butée (44, 46) agencés de manière qu'un desdits premier et deuxième doigts de butée (44, 46) arrête une paroi (27) dudit premier appendice (21) à proximité de son évidement (24) et que l'autre desdits premier et deuxième doigts de butée (44, 46) arrête une paroi (28) dudit deuxième appendice (22) à l'opposé de son évidement (24).

8. Instrument selon une des revendications précédentes 2 à 7, dans lequel ledit corps (11) présente une plaque d'extrémité polygonale (16) ; caractérisé en ce que ledit cadran (31) présente une nervure (47) de même forme qu'au moins trois côtés (18) dudit polygone, et qui sert à indiquer visuellement l'obtention d'un assemblage correct.
